(19) Europäisches Patentamt European Patent Office Office européen des brevets

(11) **EP 4 409 984 B1**

(12) **EUROPEAN PATENT SPECIFICATION**

(45) Date of publication and mention of the grant of the patent:
**19.11.2025 Bulletin 2025/47**

(21) Application number: **21958996.7**

(22) Date of filing: **30.09.2021**

(51) International Patent Classification (IPC):
*H04W 64/00* (2009.01)    *G01S 5/00* (2006.01)
*G01S 5/02* (2010.01)

(52) Cooperative Patent Classification (CPC):
**H04W 64/00; G01S 5/0036; G01S 5/0218; G01S 5/0268**

(86) International application number:
**PCT/CN2021/122463**

(87) International publication number:
**WO 2023/050430 (06.04.2023 Gazette 2023/14)**

(54) **POSITIONING MEASUREMENT REPORTING**

POSITIONSMESSUNGSMELDUNG

RAPPORT DE MESURE DE POSITIONNEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**07.08.2024 Bulletin 2024/32**

(73) Proprietor: **Nokia Technologies Oy**
**02610 Espoo (FI)**

(72) Inventors:
- **CHA, Hyun-Su**
  **Oak Park, Illinois 60302 (US)**
- **KEATING, Ryan**
  **Chicago, Illinois 60622 (US)**
- **TAO, Tao**
  **Shanghai 200432 (CN)**

(74) Representative: **Nokia EPO representatives**
**Nokia Technologies Oy**
**Karakaari 7**
**02610 Espoo (FI)**

(56) References cited:
WO-A1-2019/209747    WO-A1-2020/042081
CN-A- 112 566 178    US-A1- 2017 374 637
US-A1- 2018 146 332

- **INTERDIGITAL INC: "Discussion on reporting of positioning information using SDT", vol. RAN WG2, no. Electronic; 20210816 - 20210827, 5 August 2021 (2021-08-05), XP052032356, Retrieved from the Internet <URL:https://ftp.3gpp.org/tsg_ran/WG2_RL2/TSGR2_115-e/Docs/R2-2107684.zip R2-2107684 (R17 NR POS WI AI8113_INACTIVE_SDT).doc> [retrieved on 20210805]**
- **ERICSSON: "SDT, UL Positioning and On Demand PRS Aspects", vol. RAN WG2, no. Electronic meeting; 20210125 - 20210205, 15 January 2021 (2021-01-15), XP051974323, Retrieved from the Internet <URL:https://ftp.3gpp.org/tsg_ran/WG2_RL2/TSGR2_113-e/Docs/R2-2101393.zip R2-2101393 on SDT, UL Positioning and On Demand PRS aspects.docx> [retrieved on 20210115]**
- **ERICSSON SAMSUNG ELECTRONICS CO LTD: "Views on Rel-17 NR Positioning And SDT WIDs", vol. TSG RAN, no. Electronic Meeting; 20210316 - 20210326, 15 March 2021 (2021-03-15), XP051985838, Retrieved from the Internet <URL:https://ftp.3gpp.org/tsg_ran/TSG_RAN/TSGR_91e/Docs/RP-210488.zip RP-210488 view on rel17 NR positioning.pptx> [retrieved on 20210315]**

EP 4 409 984 B1

• HUAWEI ET AL.: "Physical layer procedure for NR positioning", 3GPP TSG RAN WG1 MEETING #98, R1-1908117, 30 August 2019 (2019-08-30), XP051764737

## Description

## FIELD

Embodiments of the present disclosure generally relate to the field of telecommunication and in particular, to devices and a method of positioning measurement reporting.

## BACKGROUND

In the fifth-generation new radio (e.g., 5G NR) network, the positioning for UEs in RRC_INACTIVE state is supported. Specifically, a network node in charge of the location management function (e.g., LMF) may request the UE to report positioning measurements, such as, measurements of downlink positioning reference signal (DL PRS) and transmission of SRS, at a periodicity for positioning measurement reporting. The UEs may report the positioning measurements via inactive state data transmission, for example, small data transmission (SDT).

Typically, there is a constraint of the reporting overhead for the inactive state data transmission. That is, for each inactive state data transmission, only a limited number of measurements is allowed to be reported. In order to provide entire measurement information, the UE may have to report respective parts of the entire measurement information by several data transmissions across multiple time slots, which is also referred to as a partial reporting procedure. During these time slots, the location of the UE may have changed, that is, the measurements to be reported may not correspond to a current location of the UE. In addition, new positioning measurements may be obtained before the partial reporting procedure is completed, however, the UE may not be able to report the new measurement information until the ongoing partial reporting procedure is completed, which would impact the positioning accuracy.

Prior art is

- INTERDIGITAL INC: "Discussion on reporting of positioning information using SDT",3GPP DRAFT; R2-2107684, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. RAN WG2, no. Electronic; 20210816 - 20210827 5 August 2021 (2021-08-05), XP052032356,
- ERICSSON: "SDT, UL Positioning and On Demand PRS Aspects",3GPP DRAFT; R2-2101393, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. RAN WG2, no. Electronic meeting; 20210125 - 20210205 15 January 2021 (2021-01-15), XP051974323,
- ERICSSON SAMSUNG ELECTRONICS CO LTD: "Views on Rel-17 NR Positioning And SDT WIDs",3GPP DRAFT; RP-210488, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. TSG RAN, no. Electronic Meeting; 20210316 - 20210326 15 March 2021 (2021-03-15), XP051985838.

## SUMMARY

The invention is defined in the independent claims. Further features are defined in dependent claims.

## BRIEF DESCRIPTION OF THE DRAWINGS

Some example embodiments will now be described with reference to the accompanying drawings, where:

FIG. 1 illustrates an example communication network in which example embodiments of the present disclosure may be implemented;

FIG. 2 shows a signaling chart illustrating a positioning measurement reporting process according to some example embodiments of the present disclosure;

FIG. 3 illustrates a flowchart of an example method for positioning measurement reporting implemented at a first device according to example embodiments of the present disclosure;

FIG. 4 illustrates a flowchart of an example method for positioning measurement reporting implemented at a first device according to example embodiments of the present disclosure ;

FIG. 5 illustrates a simplified block diagram of an apparatus that is suitable for implementing example embodiments of the present disclosure; and

FIG. 6 illustrates a block diagram of an example computer readable medium in accordance with example embodiments of the present disclosure.

Throughout the drawings, the same or similar reference numerals represent the same or similar element.

## DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:

(a) hardware-only circuit implementations (such as implementations in only analog and/or digital circuitry) and

(b) combinations of hardware circuits and software, such as (as applicable):

(i) a combination of analog and/or digital hardware circuit(s) with software/firmware and

(ii) any portions of hardware processor(s) with software (including digital signal processor(s)), software, and memory(ies) that work together to cause an apparatus, such as a mobile phone or server, to perform various functions) and

(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR Next Generation NodeB (gNB), a Remote Radio Unit (RRU), a radio header (RH), a remote radio head (RRH), Integrated Access and Backhaul (IAB) node, a relay, a low power node such as a femto, a pico, and so forth, depending on the applied terminology and technology. The network device is allowed to be defined as part of a gNB such as for example in CU/DU split in which case the network device is defined to be either a gNB-CU or a gNB-DU.

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

Positioning techniques may be used to estimate a physical location of a UE. For example, the following positioning techniques may be used in NR: downlink time difference of arrival (DL-TDoA), uplink time difference of arrival (UL-TDoA), downlink angle of departure (DL-AoD), uplink angle of arrival (UL-AoA), and/or multi-cell round trip time (multi-RTT). The positioning reference signal (PRS) and sounding reference signal (SRS) may be used as reference signals for estimating the location of the UE. PRS is a reference signal for positioning in the downlink (DL). In downlink positioning techniques, such as DL-TDoA and DL-AoD, the UE may measure the PRS from multiple gNBs. The UE may measure, for example, the reference signal time difference (RSTD) and/or reference signal received power (PRS-RSRP). These measurements may then be used to assist in estimating the location of the UE. The UE may report these measurements to the location management function (LMF), if the LMF is the entity estimating the location. In downlink and uplink positioning techniques, the UE may measure the time difference between the reception time of PRS and the transmission time of SRS, wherein the PRS may be received from and the SRS may be transmitted to multiple transmission and reception points (TRPs) or gNBs. The UE may report these measurements to the LMF.

When the UE enters or is going to enter the RRC_INACTIVE state, the last serving base station (e.g., gNB) configures the UE with time and frequency resources allocated for inactive state data transmissions, such as SDT. Moreover, the LMF may provide assistant information including the positioning reference signal (PRS) resource configuration and a periodicity for positioning measurement reporting (e.g., T ms). The UE may measure the PRS resources configured by the LMF to obtain a certain number of positioning measurements. As there is a constraint on the maximum data volume to be transmitted in SDT (e.g., 1000 bits), the UE may perform delta reporting or partial reporting across multiple time slots, which may be also referred to as multiple reporting instances. The partial reporting means the reporting of a part of positioning measurements among the total measurements obtained for the configured whole PRS resources.

However, there may be a situation where the location of the UE has been changed, but the certain number of previous positioning measurements need to be reported to the LMF. If the UE still reports as normal, and the LMF estimates the UE's location based on these measurements, the positioning accuracy may be degraded. On the other hand, the UE may obtain new positioning information at the changed location, the ongoing reporting procedure actually prevents the reporting of new positioning information.

In order to solve the above and other potential problems, embodiments of the present disclosure provide an enhanced solution for positioning measurement reporting. According to the proposed solution, the positioning measurement reporting may be implemented by means of inactive state data transmission and thus the overhead of the positioning measurements reported to the LMF at each reporting instance is reduced. In this way, the UE can save power/processing by reducing the number of resources to be measured at a given instance. It should be understood that, the present disclosure is not limited to the UEs in RRC_INACTIVE state, but both the UEs in RRC_CONNECTED state and in RRC_INACTIVE state would benefit from the proposed solution.

In addition, the UE is capable of providing an additional indication with the reported positioning measurements. The additional indication is associated with the UE's mobility and can indicate the LMF whether to jointly utilize the positioning measurements with the previously reported positioning measurements to estimate a location of the UE. Such a reporting mechanism takes the UE's mobility and the overhead/capacity of measurement reporting into consideration. Therefore, it is possible to improve the positioning accuracy while reducing the UE's power consumption.

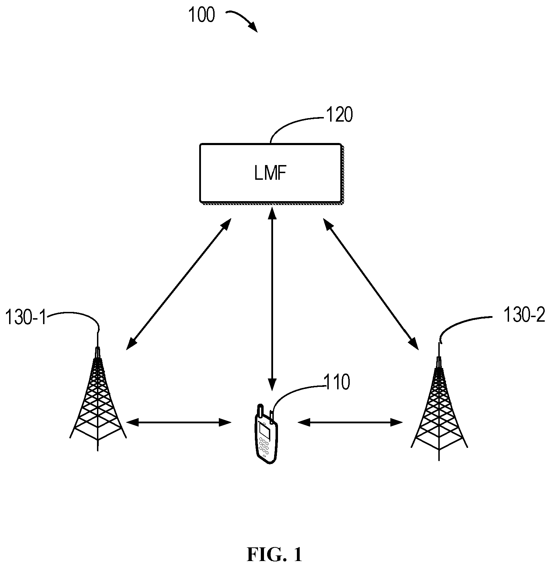

FIG. 1 illustrates an example communication network 100 in which embodiments of the present disclosure can be implemented. As shown in FIG. 1, the communication network 100 includes a first device 110, a second device 120, and a group of third devices 130-1 and 130-2. The first device 110 may be implemented as a terminal device, and the second device 120 may be the LMF device in the core network. The third devices 130-1 and 130-2 may be base stations or transmission and reception points (TRPs) for providing radio coverage to the first device 110, which may be collectively referred to as the third device 130.

The first device 110 is able to operate in various RRC states, including RRC_CONNECTED state, RRC_IDLE state, RRC_INACTIVE state. In RRC_INACTIVE state, the first device 110 operates in a low power consumption manner, like a "sleep" mode, and infrequent and small data traffic is allowed to be received or transmitted. The context of the first device 110 is kept at the last serving base station, for example, the third device 130-1, and the first device 110 may move within a radio access network (e.g., RAN) based notification area (e.g., RNA) without notifying the RAN. As such, RRC_INACTIVE state can reach a trade-off between the transmission delay, power consumption and signalling overheads. The RNA may cover several cells provided by multiple base stations, and in some cases, the terminal device may even move outside the RNA.

The second device 120 may provide the first device 110 with assistance data including PRS configuration and a periodicity of positioning measurement reporting (e.g., $T$ ms). The third device 130-1, as the last serving base station, may configure the first device 110 with time-frequency resources for inactive state transmissions to be performed when the first device 110 is in RRC_INACTIVE state. In addition, the third device 130-1 may indicate the size of SDT, that is, a maximum number of bits (e.g., L bits) that the first device can report in one SDT instance.

In the context of the present disclosure, the PRS and SDT are given as one of the various possible configurations for implementing the measurement reporting in RRC_INACTIVE state. It should be understood that the present disclosure is not limited to PRS and SDT, but is applicable to any other reference signal and data transmission procedure supported in RRC_INACTIVE state.

The first device 110 may determine a number of reporting instance (e.g., N) required for reporting overall X positioning measurements configured by the LMF 120, where $X = \sum_{i=1}^{N} X_i$, $i \in \{1, 2, \dots N\}$, and $X_i$ represents the number of positioning measurements to be reported at the i-th reporting instance.

The first device 110 may perform measurements for PRS and/or SRS (e.g., RSRD, Rx-Tx time difference or RTT, etc.) and obtain $X_i$ positioning measurements during $(i-1) \times T \leq t < i \times T$. The first device 110 may report the $X_i$ positioning measurements at the i-th reporting instance.

In the example embodiments, during the reporting procedure, the first device 110 monitors and estimates its movement or a change of location. As previously described, if the first device 110 has moved compared to its location at the (i-1)-th reporting instance, the previously obtained measurements may not be meaningful information, and the first device 110 may obtain new $X_i$ measurements for report at the (i-1)-th reporting instance.

For example, most of the UEs are equipped with multiple sensors, such as, accelerometer, orientation sensor, gyroscope, magnetic field sensor, pressure sensor, gravity sensor, proximity sensor, range sensor and so on. Accordingly, the first device 110 may estimate its movement by using its one or more sensors. For example, the first device 110 may detect changes in the device displacement, orientation, and tilt angle around three axes by using the accelerometer. For another example, the first device 110 may estimate the RS measurements, such as, propagation time and/or RSRP from multiple cells or TRPs to see if there is any difference between two reporting instances. Additionally, or alternatively, the first device 110 may determines the change of the location based on the RS measurements from the third devices 130-1 and 130-2.

The first device 110 may then report the $X_i$ positioning measurements with a specific indication associated with the mobility of the first device 110 to the second device 120. As such, the second device 110 may know whether the currently reported measurements $X_i$ can be jointly used to estimate a location of the first device 110.

In some example embodiments, the first device 110 may stop reporting the remaining measurements once it is determined that the first device 110 has moved compared to the location at the previous reporting instance. In addition, the first device 110 may provide motion parameters associated with the change of the location to the second device 120 for estimating the location of the first device 110.

When all the positioning measurements have been reported, or alternatively, when the last reporting measurements $X_N$ have been reported, the first device 110 may transmit a complete message to the second device 120.

It is also to be understood that the number of the devices as shown in FIG. 1 are only for the purpose of illustration without suggesting any limitations. For example, the network 100 may include any suitable number of terminal devices and network devices adapted for implementing embodiments of the present disclosure.

Only for ease of discussion, the first device 110 and the third device 130 are illustrated as a UE and base stations. It is to be understood that the UE and base station are only example implementations of the first device 110 and the third device 130, respectively, without suggesting any limitation as to the scope of the present application. Any other suitable implementations are possible as well.

The communications in the network 100 may conform to any suitable standards including, but not limited to, LTE, LTE-evolution, LTE-advanced (LTE-A), wideband code division multiple access (WCDMA), code division multiple access (CDMA) and global system for mobile communications (GSM) and the like. Furthermore, the communications may be performed according to any generation communication protocols either currently known or to be developed in the future. Examples of the communication protocols include, but not limited to, the first generation (1G), the second generation (2G), 2.5G, 2.75G, the third generation (3G), the fourth generation (4G), 4.5G, the fifth generation (5G) communication protocols.

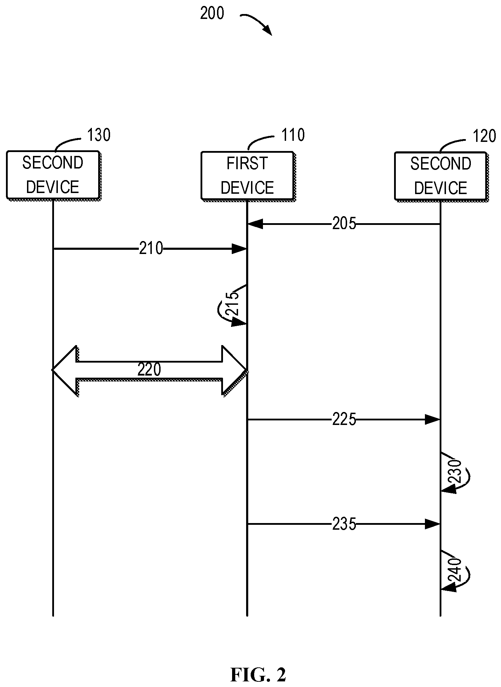

Principle and implementations of the present disclosure will be described in detail below with reference to FIGs. 2 to 4. FIG. 2 shows a signaling chart illustrating a positioning measurement reporting process 200 according to some example embodiments of the present disclosure. For the purpose of discussion, the process 200 will be described with reference to FIG. 1. The process 200 may involve the first device 110, the second device 120, and the third device 130.

As shown in FIG. 2, the third device 130-1 transmits 205 configurations of inactive state transmission for reporting the positioning measurements to the first device 110. The configurations may include, resources, a period (e.g., $P$ ms) and a data volume (e.g., $L$ bits) for the inactive state transmission. As one of the examples, the inactive state transmission may include the SDT.

The second device 120 transmits 210 assistant information for reporting the positioning measurement to the first device 110. The assistant information may include, for example, PRS configurations and a period for reporting the positioning measurements (e.g., $T$ ms). The PRS configurations may include PRS resources and a number of positioning measurements (e.g., $X$) to be reported by the first device 110.

The first device 110 determines 215 a set of measurement parameters based on the assistant information and the configurations of inactive state transmission. The set of measurement parameters may include, for example, a number of reporting instances (e.g., N) for reporting the $X$ positioning measurements, and a number of positioning measurements to be reported in a respective one of the reporting instances, where

$$X = \sum_{i=1}^{N} X_i \quad , i \in \{1, 2, \dots N\}$$ and $X_i$ is an integer greater than 0, which represents the number of measurements to be reported at the $i$-th reporting instance.

In some example embodiments, the first device 110 may calculate how many positioning measurements it can report at each reporting instance, and calculate the total number of reporting instances, that is, N. This calculation is based on the data size of SDT and the total data size of measurement report. Specifically, in a case where the period for reporting the positioning measurements is greater than the period of SDT, that is, $T > P$, and $T = nP$, then the required number of reporting instances may be determined to be $N = \lceil Q/nL \rceil$, where Q represents bits for the entire positioning measurement and Q>L $X = \sum_{i=1}^{N} X_i$, $i \in \{1, 2, \dots N\}$. In a case where the period for reporting the positioning measurements is not greater than the period of SDT, that is $T \leq P$ and $P = kT$, then the required number of reporting instances may be determined to be $N = \lceil Q/L \rceil$.

The first device 110 in RRC_INACTIVE state performs 220 positioning measurements based on a set of measurement parameters. Upon measurement, the first device 110 may obtain $X_i$ positioning measurements during a time period, $(i - 1) \times T \leq t < i \times T$. By way of example the first device 110 may measure the PRS and/or SRS configured by the second device 120, and the measurements may be based on RSRD, Rx-Tx time difference or RTT, etc.

In some example embodiments, since the first device 110 does not report all the $X$ measurements at each reporting instance, the first device 110 may measure only a part of PRS/SRS resources to obtain $X_i$ measurements. For example, each of $X_1$, $X_2$, ... , $X_N$ may be measured with specific TRPs. By way of example, measurements $X_1$ and $X_2$ may be respective positioning measurements for TRP #1/#2/#3 and positioning measurements for TRP#4/#5/#6. For another example, each of $X_1$, $X_2$, ... , $X_N$ may be measurements for specific PRS/SRS resource(s) from different or same TRPs and/or gNBs. By reducing the number of resources to be measured at a given instance, the power consumption and/or amount of the processing at the UE can be reduced.

The first device 110 reports 225 a first part of the positioning measurements with an indication regarding whether or not the first part of the positioning measurements is to be jointly utilized with a previously reported second part of the positioning measurements to estimate a location of the first device. For example, for the i-th reporting instance, the first part of the positioning measurements may refer to $X_i$ measurements, and the second part of the positioning measurements may refer to $X_{i-1}$ measurements reported at the (i-1)-th reporting instance.

Upon reception of the first part of positioning measurements, the second device 120 perform 230 positioning for the first device based at least in part on the indication.

As previously mentioned, to improve the positioning accuracy, the first device 110 may monitor and estimate its mobility during measuring and reporting the positioning measurements. For example, the first device 110 may estimate its movement or a change of location during the time period $(i - 1) \times T \leq t < i \times T$ by using its sensors, such as, accelerometer, orientation sensor, gyroscope, magnetic field sensor, pressure sensor, gravity sensor, proximity sensor, range sensor and so on. For example, the first device 110 may detect changes in the device displacement, orientation, and tilt angle around three axes by using the accelerometer.

For another example, the first device 110 may estimate the RS measurements, such as, propagation time and/or RSRP measured from multiple cells or TRPs, such as, the third devices 130-1 and 130-2 to see if there is any difference during the time period $(i-1) \times T \leq t < i \times T$.

If the first device 110 determines that it is static (e.g., the smartphone is on the desk) or no change of its location, the first device 110 may report $X_i (i \geq 2)$ measurements and a specific indicator so that the second device 120 may know the currently reported $X_i$ measurements can be jointly used with the $X_{i-1}$ measurements when the second device 120 is estimating the location of the first device 110. In this case, the second device 120 may estimate the location of the first device 110 by joint utilization of the positioning measurements reported at multiple reporting instances.

Otherwise, if the first device 110 determines that it is moving or moved and thus its location has changed, the first device 110 may report $X_i (i \geq 2)$ measurements and another specific indicator so that the second device 120 may know the currently reported $X_i$ measurements are not to be jointly used with the $X_{i-1}$ measurements when the second device 120 is estimating the location of the first device 110. Additionally, or alternatively the first device 110 may further obtain new $X_i$ measurements and report them at the i-th reporting instance. The UE reports $X_i$ measurements and a specific indicator so that the LMF know the currently reported $X_i$ measurements cannot be jointly used with the previously reported measurements.

Based on the specific indicator, the second device 120 may simply buffer the first part of positioning measurements but not jointly utilize for estimating the location of the first device 110.

Alternatively, in the above case, the second device 120 may still utilize the first and second parts of measurements jointly even if the first device 110 has indicated that it has moved. This may degrade the positioning accuracy, but it may be compensated by using motion data or parameters provided from the first device 110. Specifically, if the first device 110 determines that its location has been changed, before reporting the $X_i$ measurements at the i-th reporting instance, the first device 110 may adjust the $X_i$ measurements based on the motion parameters. For example, the first device 110 may correct the RSTD report on the fly, i.e., change the measured RSTD by the moved amount.

Alternatively, the first device 110 may not correct and still report the unchanged $X_i$ measurements, but the first device 110 further transmit, to the second device 120, motion parameters including but not limited to, a moving direction, a moving amount, a displacement, an orientation, and a tilt angle of the first device 110 and so on. The second device 120 may adjust the first part of measurements based on the motion parameters, and estimate the location of the first device 110 based on the adjusted measurements. To this end, the second device 120 may further apply a motion model (e.g., Kalman filter), or simply using the known locations of the gNBs (e.g., the third device 130) and the estimated location of the first device 110 to further update the RSTD reports before processing them.

In some example embodiments, the first device 110 may determine whether a line-of-sight (LOS) condition associated with the first device 110 is changed during a time period between the current reporting instance and the last reporting instance. The first device 110 may then generate an indication based on a determination result.

For example, if the first device 110 detects that the LOS condition is not changed during the time period, the first device 110 may set the indication to a first value indicating that the first and the second parts of the positioning measurements to be jointly utilized for poisoning the first device.

Otherwise, if the first device 110 detects that the LOS condition is changed, for example, changing from LOS to NLOS (non-line-of-sight), or from NLOS to LOS, the first device 110 may set the indication to a second value indicating that the first part of the positioning measurements not to be jointly utilized with the second part of the positioning measurements to estimate the location of the first device 110. In this case, the indication set to the second value may further indicate one of the first part and the second associated with a higher LOS parameter is to be utilized to estimate the location of the first device 110.

The indication may be in various forms. In some example embodiments, the indication may be a one-bit indicator, with a first value (e.g., 1) indicative of no movement or change of the location and a second value (e.g., 0) indicative of the movement or change of location.

In some other embodiments, the indication may be an indicator comprising a plurality of bits, and each of the bits corresponds to a respective one of multiple parts of the positioning measurements. For each of the bits, a first value (e.g., 1) may indicate that a corresponding part can be jointly utilized with the rest of the multiple parts to estimate a location of the first device 110, and the second value (e.g., 0) may indicate that the corresponding part cannot to be jointly utilized with the rest of the multiple parts.

By way of example, the indication is a 4-bit indicator, which is able to represent the possibility of joint utilization of the measurements reported at four different reporting instances. For example, the first device reports a bit-sequence "1111", so that the second device 120 may know that the reported measurements at the most recent four reporting instances can be utilized together for the location estimation. However, if the first device 110 reports a bit-sequence "1101", then the second device 120 may know that the positioning measurement reported at the third one of the most recent four reporting instances cannot be jointly used for the location estimation. It may provide additional information to the second device 120, for example, it may indicate that before the fourth one of the most recent four reporting instances, the first device 110 was back to a similar location as the location at the first and second reporting instances, such as, on the desk. Thus, even if the second device 120 cannot jointly utilize the positioning measurements after the third one of the most recent four reporting instances, the second device 120 may still buffer the reported measurements.

Upon determining all the $X$ positioning measurements have been reported, or alternatively, when the last reporting measurements $X_N$ have been reported, the first device 110 transmits 235 a complete message to the second device 120.

In some example embodiments, the first device 110 may not transmit the complete message to the second device 120 even if all the $X$ positioning measurements have been reported, that is, the complete message may not be necessary for the process 200. For example, the first device 110 has been static for a long time, for example, more than the configured reporting periodicity $T$. Even if all the measurements obtained from the configured PRS resources has been reported, the first device 110 may not send the completion message. This may be used as an implicit indication or signaling for informing the second device 120 that the location of the first device 110 is the same or similar.

In some other example embodiments, instead of the complete message, a LMF counter is introduced for indicating whether the measurement procedure is completed. specifically, if the first device 110 reports positioning measurement $X_i$ at the i-th reporting instance with the indication set to the first value (e.g., 1), the second device 120 knows that the currently reported measurements $X_i$ can be jointly used with previously reported measurements $X_{i-1}$, and in this case, the second device 120 may increase the counter. Otherwise, if the measurement $X_i$ is reported with the indication set to the second value (e.g., 0), the second device 120 may determine that the completion message is implicitly sent and in this case, the second device 120 may reset the counter.

Upon receipt of the complete message or implicitly determine that the reporting procedure is completed, the second device 120 determines 240 not to buffer the reported measurements.

Although the example embodiments are described in connection with the UE in RRC_INACTIVE state and by means for the inactive state data transmission, such as, SDT, it should be noted that the provided reporting mechanism is also appliable to the UE in RRC_CONNECTED state. With the indicator about the UE's mobility, the positioning accuracy can be improved.

It is to be understood that the reporting mechanism provided in the example embodiments is applicable to not only the positioning measurement report but also to other information to be transmitted between the terminal device and the LMF in the RRC_INACTIVE state. Moreover, such a mechanism is suitable for both the UE based positioning and the UE assisted positioning.

According to the example embodiments of the present disclosure, an enhanced measurement reporting mechanism is provided for UE in RRC_INACTIVE state. By adopting the enhanced reporting mechanism, the UE is capable of providing assistant information about a location change, which may in turn improve the positioning accuracy at LMF. In addition, for each reporting instance, unnecessary measurements on all the PRS resources can be avoided, thus the power saving can be realized at the UE, and the overhead for reporting at each reporting instance can be reduced.

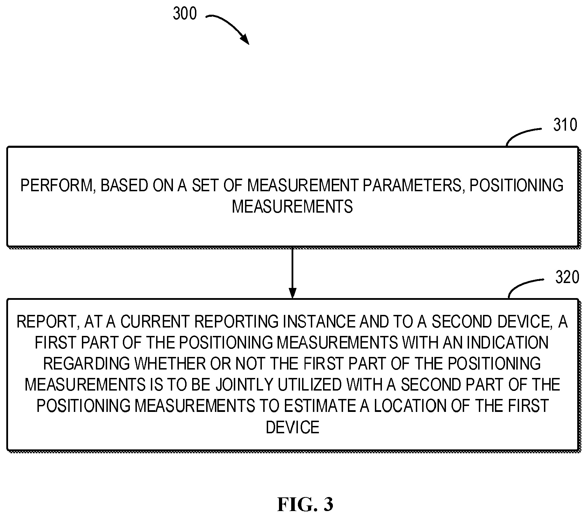

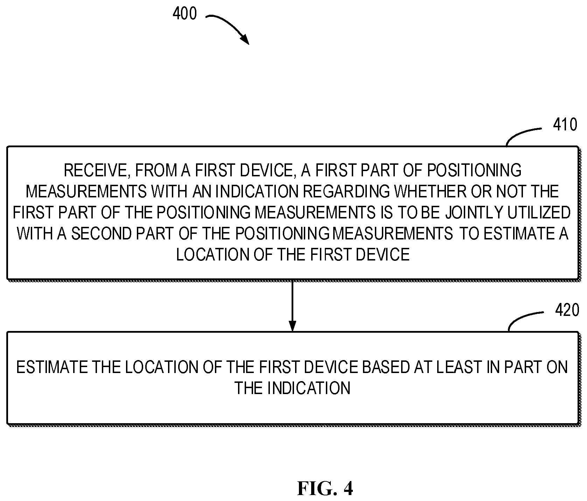

Corresponding to the process described in connection with FIG. 2, embodiments of the present disclosure provide a solution for measurement reporting involving the location management function node, the network devices/TRPs and the terminal device. These methods will be described below with reference to FIGs. 3 and 4.

FIG. 3 illustrates a flowchart of an example method 300 for positioning measurement reporting implemented at a terminal device according to example embodiments of the present disclosure. The method 300 can be implemented at the first device 110 shown in FIG. 1. For the purpose of discussion, the method 300 will be described with reference to FIG. 1. It is to be understood that method 300 may further include additional blocks not shown and/or omit some shown blocks, and the scope of the present disclosure is not limited in this regard.

As shown in FIG. 3, at 310, the first device 110 performs positioning measurements based on a set of measurement parameters. For example, the first device 110 may perform measurements on the PRS resources from a group of TRPs, such as, the network devices 130-1 and 130-2. In some example embodiments, the first device 110 may be in RRC_INACTIVE state.. In some other example embodiments, the first device 110 may be in RRC_CONNECTED state. For the purpose of discussion, the embodiments are described in the context of RRC_INACTIVE state, but the reporting mechanism is also applicable to the measurement reporting in RRC_CONNECTED state.

Specifically, before entering the RRC_INACTIVE state, the first device 110 may receive assistant information for reporting the positioning measurements from the second device 120. In some example embodiments, the assistant information may comprise at least one of PRS configurations comprising PRS resources and a number of positioning measurements to be reported by the first device, and a period for reporting the positioning measurements.

In addition, the first device 110 may receive configurations of SDT for reporting the positioning measurements from the network device 130-1, which is the last serving base station. The configurations of SDT may comprise a data volume, a period of SDT and so on. The data volume of SDT may indicate a maximum number of bits allowed to be transmitted via SDT.

In some example embodiments, the set of measurement parameters may comprise at least one of a number of reporting instances for reporting a number of positioning measurements configured by the second device, and a number of positioning measurements to be reported in a respective one of the reporting instances.

The positioning measurements are transmitted via SDT. In some example embodiments, the first device 110 may determine whether the period for reporting the positioning measurements exceeds the period for SDT. If the first device 110 determines that the period for reporting the positioning measurements exceeds the period of SDT, the first device 110 may determine the number of reporting instances based on a number of positioning measurements to be reported by the first device 110, a data volume and the period of SDT, and the period for reporting the positioning measurements. Otherwise, if the first device 110 determines that the period for reporting the positioning measurements does not exceed the period of the SDT, the first device 110 may determine the number of reporting instances based on the number of positioning measurements to be reported by the first device 110 and the data volume of SDT.

In some example embodiments, the first device 110 measures, at each of reporting instances, a group of reference signals on at least a part of preconfigured resources for positioning. The positioning measurements for each of the reporting instances may be measured from the same transmission and receipt points, TRPs, or from different TRPs. Since for each reporting instance, the UE may only measure and report part of the PRS resources, unnecessary power consumption can be avoided.

In some example embodiments, the first device 110 may determine whether a location of the first device 110 is changed during a time period between the current reporting instance and the last reporting instance. The first device 110 may then generate an indication based on a determination result. The indication may be set to indicate whether or not the first part of the positioning measurements is to be jointly utilized with a previously reported second part of the positioning measurements to estimate a location of the first device 110.

The change of the location of the first device 110 may be determined based on one of the positioning measurements, the RS measurements from a group of TRPs or data obtained from one or more sensors of the first device 110.

Most of the UEs are equipped with multiple sensors, such as, accelerometer, orientation sensor, gyroscope, magnetic field sensor, pressure sensor, gravity sensor, proximity sensor, range sensor and so on. The first device 110 may estimate its movement by using its one or more sensors. For example, the first device 110 may detect changes in the device displacement, orientation, and tilt angle around three axes by using the accelerometer. For another example, the first device 110 may estimate the RS measurements, such as, propagation time and/or RSRP measured from multiple cells or TRPs to see if there is any difference between two reporting instances.

In some example embodiments, if the first device 110 determines that the location of the first device 110 is not changed during the time period between the current reporting instance and the last reporting instance, the first device 110 may set the indication to a first value, which indicates that the first and the second parts of the positioning measurements to be jointly utilized for poisoning the first device 110.

Otherwise, if the first device 110 determines that that the location of the first device 110 is changed during the time period, the first device 110 may set the indication to a second value different from the first value, and the second value indicates that the first part of the positioning measurements is not jointly utilized with the second part of the positioning measurements to estimate a location of the first device 110.

In some example embodiments, the first device 110 may determine whether a line-of-sight condition associated with the first device 110 is changed during a time period between the current reporting instance and the last reporting instance. The first device 110 may then generate an indication based on a determination result.

For example, if the first device 110 detects that the LOS condition is not changed during the time period, the first device 110 may set the indication to a first value indicating that the first and the second parts of the positioning measurements to be jointly utilized for poisoning the first device.

Otherwise, if the first device 110 detects that the LOS condition is changed, for example, changing from LOS to NLOS (non-line-of-sight), or from NLOS to LOS, the first device 110 may set the indication to a second value indicating that the first part of the positioning measurements not to be jointly utilized with the second part of the positioning measurements to estimate the location of the first device 110. In this case, the indication set to the second value may further indicate one of the first part and the second associated with a higher LOS parameter is to be utilized to estimate the location of the first device 110.

At 320, the first device 110 reports, at a current reporting instance and to a second device 120, a first part of the positioning measurements with an indication regarding whether or not the first part of the positioning measurements is to be jointly utilized with a previously reported second part of the positioning measurements to estimate a location of the first device.

The indication may be in various forms. In some example embodiments, the indication may be a one-bit indicator with a first value indicative of the location of the first device 110 is not changed during the time period between the last reporting instance and the current reporting instance, and a second value indicative of the location of the first device 110 is changed during the time period.

Alternatively, in some other example embodiments, the indication may be an indicator comprising a plurality of bits, and each of the bits corresponds to a respective one of multiple parts of the positioning measurements. For each of the bits, the first value may indicate that a corresponding part is to be jointly utilized with the rest of the multiple parts to estimate a location of the first device 110, and the second value may indicate that the corresponding part is not to be jointly utilized with the rest of the multiple parts.

In some other example embodiments, if the first device 110 determines that the location of the first device 110 is changed during the time period, the first device 110 may determine motion parameters of the first device 110. Additionally, the first device 110 may transmit the motion parameters to the second device 120 to estimate a location of the first device 110. The motion parameters may comprise at least one of a moving direction, a moving amount, a displacement, an orientation, and a tilt angle of the first device 110.

In some other example embodiments, if the first device 110 determines that the location of the first device 110 is changed during the time period, the first device 110 may determine motion parameters of the first device 110. Additionally, before reporting to the second device 120, the first device 110 may adjust the first part of the positioning measurements based on the motion parameters.

In some other example embodiments, if the first device 110 determines that all the positioning measurements are reported, the first device 110 may transmit a complete message to the second device 120.

In some other example embodiments, if the first device 110 determines that the location of the first device 110 is changed during the time period, the first device 110 may discard the rest of the positioning measurements which has not been reported yet.

The example embodiments of the present disclosure provide an enhanced measurement reporting mechanism. According to the enhanced mechanism, the UE in RRC_INACTIVE state is capable of reporting RS measurements at each reporting instance with a reduced overhead, for example, limited to the maximum data volume allowed in SDT. Thus, the power consumption at the UE's side is reduced. The UE further takes its mobility into consideration, since any movement or change of location may have an effect on the accuracy of the measurements. At each reporting instance, the UE reports an indicator so that the LMF can determine whether or not to jointly utilize the measurements reported across multiple time slots. As such, the positioning accuracy can be improved.

FIG. 4 illustrates a flowchart of an example method 400 for positioning measurement reporting implemented at a LMF node according to example embodiments of the present disclosure. The method 400 can be implemented at the second device 120 shown in FIG. 1. For the purpose of discussion, the method 400 will be described with reference to FIG. 1. It is to be understood that method 400 may further include additional blocks not shown and/or omit some shown blocks, and the scope of the present disclosure is not limited in this regard.

The second device 120 may transmit, to the first device 110, assistant information for reporting the positioning measurements. The assistant information may comprise at least one of PRS configurations and a period for reporting the positioning measurements. For example, the PRS configuration may comprise PRS resources and a number of positioning measurements to be reported by the first device 110.

At 410, the second device 120 receives, from a first device 110, a first part of positioning measurements with an indication regarding whether or not the first part of the positioning measurements is to be jointly utilized with a previously reported second part of the positioning measurements to estimate a location of the first device 110.

In some example embodiments, the first device 110 may be in RRC_INACTIVE state. In some other example embodiments, the first device 110 may be in RRC_CONNECTED state. For the purpose of discussion, the embodiments are described in the context of RRC_INACTIVE state, but the reporting mechanism is also applicable to the measurement reporting in RRC_CONNECTED state.

At 420, the second device 120 estimates the location of the first device 110 based at least in part on the indication.

In some example embodiments, the indication may comprise a one-bit indicator with a first value indicating the location of the first device 110 is not changed during a time period between the last reporting instance and the current reporting instance, and a second value indicating the location of the first device 110 is changed during the time period.

In some example embodiments, if the indication is set to a first value, the second device 120 may estimate a location of the first device 110 based on the first and second parts of the positioning measurements.

Otherwise, if the indication is set to a second value, the second device 120 may discard the first part of the positioning measurements. In this case, the second device 120 may then receive, from the first device 110 that is in the inactive state, a third part of the positioning measurements. The second device 120 may estimating a location of the first device 110 based on the third part of the positioning measurements.

Alternatively, if the indication is set to the second value, the second device 120 may estimate the location of the first device 110 based on one of the first and second parts of the positioning measurements that is associated with a higher LOS parameter.

In some example embodiments, a counter may be introduced for the second device. Specifically, if the indication is set to a first value, the second device 120 may increase a value of the counter for indicating the positioning measurement is not completed. Otherwise, if the indication is set to a second value, the second device 120 may reset the value of the counter for indicating the positioning measurement being completed.

In some example embodiments, the indication may be an indicator comprising a plurality of bits. Each of the plurality of bits corresponds to a respective one of multiple parts of the positioning measurements, and for each of the bits, the first value indicates a corresponding part to be jointly utilized with the rest of the multiple parts to estimate a location of the first device 110, and the second value indicates the corresponding part not to be jointly utilized with the rest of the multiple parts.

In the above embodiments, if a last bit of the indicator is set to the second value, which means that the first part of positioning measurements currently reported is not to be jointly utilized, the second device 120 may discard the first part of the positioning measurements. The second device 120 may receive, from the first device 110 that is in the inactive state, a third part of the positioning measurements. The second device 120 may then estimate a location of the first device 110 based on the third part of the positioning measurements.

Otherwise, if the last bit of the indicator is set to the first value, the second device 120 may estimate the location of the first device 110 based on the first part of the positioning measurements and a previously received part of the positioning measurements corresponding to a bit in the indication that is set to the first value.

In the embodiments where the indication indicates that the first and second parts are to be jointly utilized, the second device 120 may receive, from the first device 110, motion parameters to estimate a location of the first device 110. The motion parameters may comprise, for example, a moving direction, a moving amount, a displacement, an orientation, and a tilt angle of the first device 110 and so on. The second device 120 may adjust the reported first part of the positioning measurements based on the motion parameters. The second device 120 may then estimate the location of the first device 110 based on the adjusted first part of the positioning measurements. In this case, the second device 120 can ignore the value of the indication.

In some example embodiments, the second device 120 may receive, from the first device 110, a complete message for indicating the reporting of the positioning measurements being completed.

In some example embodiments, the second device 120 may store the positioning measurements, for example, in the buffer, until receiving a complete message from the first device 110.

In some example embodiments, if the indication indicates the first part of the positioning measurements is not to be jointly utilized, the second device 120 may estimate the location of the first device 110 based on the first part of the positioning measurements, a second part of the positioning measurements received previously, an estimated position of first device, and location information of TRPs for positioning.

According to the example embodiments of the present disclosure, an enhanced measurement reporting mechanism is provided. By adopting the enhanced reporting mechanism, an additional indication about the UE's mobility in RRC_INACTIVE state can be provided to the LMF. The indication is configured to indicate whether a partial measurement can be jointly utilized with the previously reported measurements to estimate a location of the UE. As such, the positioning accuracy for UEs in RRC_INACTIVE state can be improved.

In some example embodiments, a first apparatus capable of performing any of the method 300 (for example, the first device 110) may comprise means for performing the respective steps of the method 300. The means may be implemented in any suitable form. For example, the means may be implemented in a circuitry or software module.

In some example embodiments, the first apparatus comprises: means for performing, at the first apparatus and based on a set of measurement parameters, positioning measurements; and means for means for reporting, at a current reporting instance and to a second apparatus, a first part of the positioning measurements with an indication regarding whether or not the first part of the positioning measurements is to be jointly utilized with a second part of the positioning measurements to estimate a location of the first apparatus, the second part of the positioning measurements being previously reported to the second apparatus.

In some example embodiments, the first apparatus further comprises: means for receiving, from the second apparatus, assistant information for reporting the positioning measurements; means for receiving, from a network device, configurations of small data transmission, SDT, for reporting the positioning measurements; and means for determining the set of measurement parameters based on the assistant information and the configurations of SDT.

In some example embodiments, the assistant information comprises at least one of the following: resources allocated for inactive state data transmission, and a number of positioning measurements to be reported by the first apparatus, and a period for reporting the positioning measurements.

In some example embodiments, the set of measurement parameters comprises at least one of the following: a number of reporting instances for reporting a number of positioning measurements configured by the second apparatus, and a number of positioning measurements to be reported in a respective one of the reporting instances.

In some example embodiments, the positioning measurements are transmitted via small data transmission, SDT, and the means for determining the set of measurement parameters comprises: means for in accordance with a determination that a period for reporting the positioning measurements exceeds a period of the SDT, determining the number of reporting instances based on a number of positioning measurements to be reported by the first apparatus, a data volume and the period of SDT, and the period for reporting the positioning measurements, and means for in accordance with a determination that the period for reporting the positioning measurements does not exceed the period of the SDT, determining the number of reporting instances based on the number of positioning measurements to be reported by the first apparatus and the data volume of SDT.

In some example embodiments, the means for performing the positioning measurement comprises: means for measuring, at each of reporting instances, a group of reference signals on at least a part of preconfigured resources for positioning, the positioning measurements for each of the reporting instances being measured from the same transmission and receipt points, TRPs, or from different TRPs.

In some example embodiments, the first apparatus further comprises: means for determining whether a location of the first apparatus is changed during a time period between the current reporting instance and the last reporting instance; and means for generating the indication based on a determination result.

In some example embodiments, the change of the location is determined based on at least one of the following: the positioning measurements, reference signal measurements from a group of transmission and receipt points, or data obtained from one or more sensors of the first apparatus.

In some example embodiments, the means for generating the indication comprises: means for in accordance with a determination that the location of the first apparatus is not changed during the time period, setting the indication to a first value indicating that the first and the second parts of the positioning measurements to be jointly utilized for poisoning the first apparatus; and mean for in accordance with a determination that the location of the first apparatus is changed during the time period, setting the indication to a second value different from the first value indicating that the first part of the positioning measurements not to be jointly utilized with the second part of the positioning measurements to estimate a location of the first apparatus.

In some example embodiments, the indication comprises one of the following: a one-bit indicator with a first value indicating the location of the first apparatus is not changed and a second value indicating the location of the first apparatus is changed, or an indicator comprising a plurality of bits each corresponding to a respective one of multiple parts of the positioning measurements, and for each of the bits, the first value indicating a corresponding part to be jointly utilized with the rest of the multiple parts to estimate a location of the first apparatus, and the second value indicating the corresponding part not to be jointly utilized with the rest of the multiple parts.

In some example embodiments, the first apparatus further comprises: means for in accordance with a determination that the location of the first apparatus is changed during the time period, determining motion parameters of the first apparatus; and means for transmitting the motion parameters to the second apparatus to estimate a location of the first apparatus, the motion parameters comprising at least one of a moving direction, a moving amount, a displacement, an orientation, and a tilt angle of the first apparatus.

In some example embodiments, the first apparatus further comprises: means for in accordance with a determination that the location of the first apparatus is changed during the time period, determining motion parameters of the first apparatus; and means for before reporting to the second apparatus, adjusting the first part of the positioning measurements based on the motion parameters.

In some example embodiments, the first apparatus further comprises means for in accordance with a determination that all of the positioning measurements are reported, transmitting a complete message to the second apparatus.

In some example embodiments, the first apparatus further comprises means for in accordance with a determination that the location of the first apparatus is changed during the time period, discarding the rest of the positioning measurements which has not been reported yet.

In some example embodiments, the first apparatus further comprises: means for determining whether a line-of-sight, LOS, condition associated with the first apparatus is changed during a time period between the current reporting instance and the last reporting instance; and means for generating the indication based on a determination result.

In some example embodiments, the means for generating the indication comprises: means for in accordance with a determination that the LOS condition is not changed during the time period, setting the indication to a first value indicating that the first and the second parts of the positioning measurements to be jointly utilized for poisoning the first apparatus; and means for in accordance with a determination that the LOS condition is changed, setting the indication to a second value different from the first value indicating that the first part of the positioning measurements not to be jointly utilized with the second part of the positioning measurements to estimate the location of the first apparatus.

In some example embodiments, the means for generating the indication comprises: means for in accordance with a determination that the LOS condition is not changed during the time period, setting the indication to a first value indicating that the first and the second parts of the positioning measurements to be jointly utilized for poisoning the first apparatus; and means for in accordance with a determination that the LOS condition is changed, setting the indication to a second value different from the first value indicating that one of the first part and the second associated with a higher LOS parameter is to be utilized to estimate the location of the first apparatus.

In some example embodiments, the first apparatus is a terminal device, and the second apparatus is a location management function node.

In some example embodiments, a second apparatus capable of performing any of the method 400 (for example, the second device 120) may comprise means for performing the respective steps of the method 400. The means may be implemented in any suitable form. For example, the means may be implemented in a circuitry or software module.

In some example embodiments, the second apparatus comprises: means for receiving, at the second apparatus and from a first apparatus, a first part of positioning measurements with an indication regarding whether or not the first part of the positioning measurements is to be jointly utilized with a second part of the positioning measurements to estimate a location of the first apparatus, the second part of the positioning measurements being previously reported from the first apparatus; and means for estimating the location of the first apparatus for the first apparatus based at least in part on the indication.

In some example embodiments, the second apparatus further comprises means for transmitting, to the first apparatus, assistant information for reporting the positioning measurements, the assistant information comprising at least one of the following: resources allocated for inactive state data transmission, and a number of positioning measurements to be reported by the first apparatus, and a period for reporting the positioning measurements.

In some example embodiments, the indication comprises a one-bit indicator with a first value indicating the location of the first apparatus is not changed during a time period between a current reporting instance and the last reporting instance, and a second value indicating the location of the first apparatus is changed during the time period.

In some example embodiments, the means for estimating the location of the first apparatus comprises: means for in accordance with a determination that the indication is set to a first value, estimating a location of the first apparatus based on the first and second parts of the positioning measurements.

In some example embodiments, the means for estimating the location of the first apparatus comprises: means for in accordance with a determination that the indication is set to a second value, discarding the first part of the positioning measurements; means for receiving, from the first apparatus that is in the inactive state, a third part of the positioning measurements; and means for estimating a location of the first apparatus based on the third part of the positioning measurements.

In some example embodiments, the means for estimating the location of the first apparatus comprises: means for in accordance with a determination that the indication is set to a second value, estimating the location of the first apparatus based on one of the first and second parts of the positioning measurements that is associated with a higher LOS parameter.

In some example embodiments, the second apparatus further comprises: means for in accordance with a determination that the indication is set to a first value, increasing a value of a counter for indicating the positioning measurement is not completed; and means for in accordance with a determination that the indication is set to a second value, resetting the value of the counter for indicating the positioning measurement being completed.

In some example embodiments, the indication comprises an indicator comprising a plurality of bits each corresponding to a respective one of multiple parts of the positioning measurements, and for each of the bits, the first value indicating a corresponding part to be jointly utilized with the rest of the multiple parts to estimate a location of the first apparatus, and the second value indicating the corresponding part not to be jointly utilized with the rest of the multiple parts.

In some example embodiments, the means for estimating the location of the first apparatus comprises: means for in accordance with a determination that a last bit of the indicator is set to the second value, discarding the first part of the positioning measurements; means for receiving, from the first apparatus that is in the inactive state, a third part of the positioning measurements; and means for estimating a location of the first apparatus based on the third part of the positioning measurements.

In some example embodiments, the means for estimating the location of the first apparatus comprises: means for in accordance with a determination that a last bit of the indicator is set to the first value, estimating the location of the first apparatus based on the first part of the positioning measurements and a previously received part of the positioning measurements corresponding to a bit in the indication that is set to the first value.

In some example embodiments, the means for estimating the location of the first apparatus comprises: means for receiving, from the first apparatus, motion parameters to estimate a location of the first apparatus, the motion parameters comprising at least one of a moving direction, a moving amount, a displacement, an orientation, and a tilt angle of the first apparatus; means for adjusting the first part of the positioning measurements based on the motion parameters; and means for estimating a location of the first apparatus based on the adjusted first part of the positioning measurements.

In some example embodiments, the second apparatus further comprises: means for receiving, from the first apparatus, a complete message for indicating the reporting of the positioning measurements being completed.

In some example embodiments, the second apparatus further comprises: means for storing the positioning measurements until receiving a complete message from the first apparatus.

In some example embodiments, the means for estimating the location of the first apparatus comprises: means for in accordance with a determination that the indication indicates the first part of the positioning measurements is not to be jointly utilized, estimating a location of the first apparatus, based on the first part of the positioning measurements, a second part of the positioning measurements received previously, an estimated position of first apparatus, and location information of transmission and receipt points, TRPs for positioning.

In some example embodiments, the first apparatus is a terminal device, and the second apparatus is a location management function node.

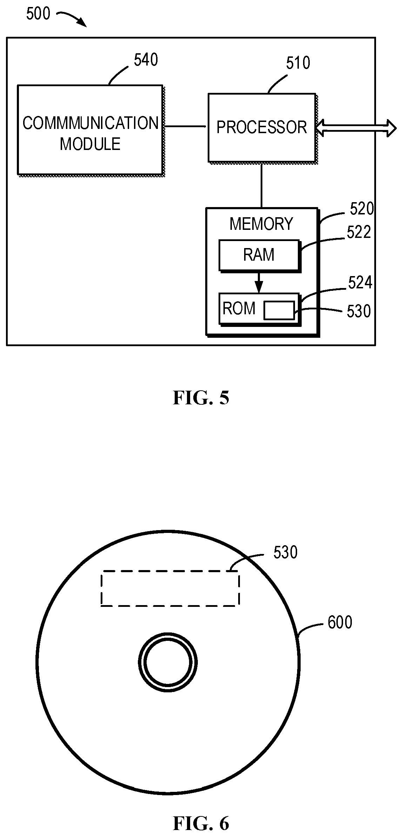

FIG. 5 is a simplified block diagram of a device 500 that is suitable for implementing embodiments of the present disclosure. The device 500 may be provided to implement the communication device, for example the first device 110 and the second device 120 as shown in FIG. 1. As shown, the device 500 includes one or more processors 510, one or more memories 520 coupled to the processor 510, and one or more transmitters and receivers (TX/RX) 540 coupled to the processor 510.

The TX/RX 540 is for bidirectional communications. The TX/RX 540 has at least one antenna to facilitate communication. The communication interface may represent any interface that is necessary for communication with other network elements.

The processor 510 may be of any type suitable to the local technical network and may include one or more of the following: general purpose computers, special purpose computers, microprocessors, digital signal processors (DSPs) and processors based on multicore processor architecture, as non-limiting examples. The device 500 may have multiple processors, such as an application specific integrated circuit chip that is slaved in time to a clock which synchronizes the main processor.

The memory 520 may include one or more non-volatile memories and one or more volatile memories. Examples of the non-volatile memories include, but are not limited to, a Read Only Memory (ROM) 524, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 522 and other volatile memories that will not last in the power-down duration.

A computer program 530 includes computer executable instructions that are executed by the associated processor 510. The program 530 may be stored in the ROM 524. The processor 510 may perform any suitable actions and processing by loading the program 530 into the RAM 522.

The embodiments of the present disclosure may be implemented by means of the program 530 so that the device 600 may perform any process of the disclosure as discussed with reference to FIGs. 3-4. The embodiments of the present disclosure may also be implemented by hardware or by a combination of software and hardware.

In some example embodiments, the program 530 may be tangibly contained in a computer readable medium which may be included in the device 500 (such as in the memory 520) or other storage devices that are accessible by the device 500. The device 500 may load the program 530 from the computer readable medium to the RAM 522 for execution. The computer readable medium may include any types of tangible non-volatile storage, such as ROM, EPROM, a flash memory, a hard disk, CD, DVD, and the like. FIG. 6 shows an example of the computer readable medium 600 in form of CD or DVD. The computer readable medium has the program 530 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, device, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target real or virtual processor, to carry out the methods 300 and 400 as described above with reference to FIGs. 3-4. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing device, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, device or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, device, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

**Claims**

1. A first device comprising:

   means for performing, based on a set of measurement parameters, positioning measurements; and
   means for reporting, at a current reporting instance and to a second device, a first part of the positioning measurements with an indication regarding whether or not the first part of the positioning measurements is to be jointly utilized with a second part of the positioning measurements to estimate a location of the first device, the second part of the positioning measurements being previously reported to the second device.

2. The first device of claim 1, further comprising:

   means for receiving, from the second device, assistant information for reporting the positioning measurements;
   means for receiving, from a network device, configurations of small data transmission, SDT, for reporting the positioning measurements; and
   means for determining the set of measurement parameters based on the assistant information and the configurations of SDT.

3. The first device of claim 2, wherein the assistant information comprises at least one of the following:

   resources allocated for inactive state data transmission,
   a number of positioning measurements to be reported by the first device, or
   a period for reporting the positioning measurements.

4. The first device of any of claims 1-3, wherein the set of measurement parameters comprises at least one of the following:

   a number of reporting instances for reporting a number of positioning measurements configured by the second device, or
   a number of positioning measurements to be reported in a respective one of the reporting instances.

5. The first device of any of claims 1-4, further comprising:

   means for measuring, in the time duration between different reporting instances, a group of reference signals on at least a part of preconfigured resources for positioning,
   wherein the positioning measurements for each of the reporting instances being measured from the same transmission and receipt points, TRPs, or from different TRPs.

6. The first device of any of claims 1-5, further comprising:

    means for determining whether a location of the first device is changed during a time period between the current reporting instance and the last reporting instance; and
    means for generating the indication based on a determination result.

7. The first device of claim 6, wherein the change in the location of the first device is determined based on at least one of the following:

    the positioning measurements,
    reference signal measurements from a group of TRPs, or
    data obtained from one or more sensors of the first device.

8. The first device of any of claims 1-7, wherein the indication comprises one of the following:

    a one-bit indicator with a first value indicating the location of the first device is not changed and a second value indicating the location of the first device is changed, or
    an indicator comprising a plurality of bits, each corresponding to a respective one of multiple parts of the positioning measurements, and for each of the bits, the first value indicating a corresponding part to be jointly utilized with the rest of the multiple parts to estimate the location of the first device, and the second value indicating the corresponding part not to be jointly utilized with the rest of the multiple parts.

9. The first device of any of claims 1-8, further comprising:
    in accordance with a determination that all of the positioning measurements are reported, means for transmitting a complete message to the second device.

10. The first device of any of claims 1-9, further comprising:

    means for determining whether a line-of-sight, LOS, condition associated with the first device is changed during a time period between the current reporting instance and the last reporting instance; and
    means for generating the indication based on a determination result.

11. The first device of any of claims 1-10, wherein the first device is a terminal device, and the second device is a location management function node.

12. A second device comprising:

    means for receiving, from a first device that is in an inactive state, a first part of positioning measurements with an indication regarding whether or not the first part of the positioning measurements is to be jointly utilized with a second part of the positioning measurements to estimate a location of the first device, the second part of the positioning measurements being previously reported from the first device; and
    means for estimating the location of the first device based at least in part on the indication.

13. The second device of claim 12, further comprising:

    means for transmitting, to the first device, assistant information for reporting the positioning measurements,
    wherein the assistant information comprising at least one of the following:

        resource allocated for inactive state data transmission,
        a number of positioning measurements to be reported by the first device, or
        a period for reporting the positioning measurements.

14. The second device of claim 12 or 13, wherein the indication comprises a one-bit indicator with a first value indicating the location of the first device is not changed during a time period between a current reporting instance and the last reporting instance, and a second value indicating the location of the first device is changed during the time period.

15. A method comprising:

    performing, by a first device in an inactive state and based on a set of measurement parameters, positioning measurements; and
    reporting, at a current reporting instance and to a second device, a first part of the positioning measurements with an indication regarding whether or not the first part of the positioning measurements is to be jointly utilized with a second part of the positioning measurements to estimate the location of the first device, the second part of the positioning measurements being previously reported to the second device.

**Patentansprüche**

1. Erste Vorrichtung, die Folgendes umfasst:

    Mittel zum Durchführen von Positionsbestimmungsmessungen auf Basis eines Satzes von Messparametern; und
Mittel zum Melden eines ersten Teils der Positionsbestimmungsmessungen zu einer aktuellen Meldeinstanz bei einer zweiten Vorrichtung mit einer Anzeige dazu, ob der erste Teil der Positionsbestimmungsmessungen gemeinsam mit einem zweiten Teil der Positionsbestimmungsmessungen zu verwenden ist oder nicht, um einen Standort einer ersten Vorrichtung zu schätzen, wobei der zweite Teil der Positionsbestimmungsmessungen der zweiten Vorrichtung zuvor gemeldet wurde.

2. Erste Vorrichtung nach Anspruch 1, die ferner Folgendes umfasst:

Mittel zum Empfangen von Unterstützungsinformationen zum Melden der Positionsbestimmungsmessungen von der zweiten Vorrichtung;
Mittel zum Empfangen von Auslegungen einer Kleindatenübertragung, SDT, zum Melden der Positionsbestimmungsmessungen von einer Netzwerkvorrichtung; und
Mittel zum Bestimmen des Satzes von Messparametern auf Basis der Unterstützungsinformationen und der Auslegungen von SDT.

3. Erste Vorrichtung nach Anspruch 2, wobei die Unterstützungsinformationen mindestens eines von Folgendem umfassen:

zugeteilten Ressourcen für eine Datenübertragung in einem Inaktivitätszustand,
einer Anzahl von Positionsbestimmungsmessungen, die von der ersten Vorrichtung zu melden sind, oder
einer Periode zum Melden der Positionsbestimmungsmessungen.

4. Erste Vorrichtung nach einem der Ansprüche 1 bis 3, wobei der Satz von Messparametern mindestens eines von Folgendem umfasst:

einer Anzahl von Meldeinstanzen zum Melden
einer Anzahl von Positionsbestimmungsmessungen, die von der zweiten Vorrichtung ausgelegt ist, oder
einer Anzahl von Positionsbestimmungsmessungen, die in einer jeweiligen der Meldeinstanzen zu melden sind.

5. Erste Vorrichtung nach einem der Ansprüche 1 bis 4, die ferner Folgendes umfasst:

Mittel zum Messen einer Gruppe von Referenzsignalen auf mindestens einem Teil von vorausgelegten Ressourcen in der Zeitdauer zwischen verschiedenen Meldeinstanzen für eine Positionsbestimmung,
wobei die Positionsbestimmungsmessungen für jede der Meldeinstanzen von denselben Übertragungs- und Empfangspunkten, TRPs, oder von verschiedenen TRPs gemessen werden.

6. Erste Vorrichtung nach einem der Ansprüche 1 bis 5, die ferner Folgendes umfasst:

Mittel zum Bestimmen, ob ein Standort der ersten Vorrichtung während einer Zeitperiode zwischen der aktuellen Meldeinstanz und der letzten Meldeinstanz geändert wurde; und
Mittel zum Erzeugen der Anzeige auf Basis eines Bestimmungsergebnisses.

7. Erste Vorrichtung nach Anspruch 6, wobei die Änderung des Standorts der ersten Vorrichtung auf Basis von mindestens einem von Folgendem bestimmt wird:

den Positionsbestimmungsmessungen,
Referenzsignalmessungen von einer Gruppe von TRPs, oder
von einem oder mehreren Sensoren der ersten Vorrichtung erhaltenen Daten.

8. Erste Vorrichtung nach einem der Ansprüche 1 bis 7, wobei die Anzeige eines von Folgendem umfasst:

einen Ein-Bit-Indikator mit einem ersten Wert, der anzeigt, dass der Standort der ersten Vorrichtung nicht geändert wurde, und einem zweiten Wert, der anzeigt, dass der Standort der ersten Vorrichtung geändert wurde, oder
einen Indikator, der eine Vielzahl von Bits umfasst, von denen jedes einem jeweiligen der mehreren Teile der Positionsbestimmungsmessungen entspricht, und wobei der erste Wert für jedes der Bits einen entsprechenden Teil anzeigt, der gemeinsam mit dem Rest der mehreren Teile zu verwenden ist, um den Standort der ersten Vorrichtung zu schätzen, und wobei der zweite Wert anzeigt, dass der entsprechende Teil nicht gemeinsam mit dem Rest der mehreren Teile zu verwenden ist.

9. Erste Vorrichtung nach einem der Ansprüche 1 bis 8, die ferner Folgendes umfasst:
gemäß einer Bestimmung, dass alle Positionsbestimmungsmessungen gemeldet wurden, Mittel zum Übertragen einer Abschlussnachricht zur zweiten Vorrichtung.

10. Erste Vorrichtung nach einem der Ansprüche 1 bis 9, die ferner Folgendes umfasst:

Mittel zum Bestimmen, ob ein Sichtlinien(LOS)-Zustand, der mit der ersten Vorrichtung verknüpft ist, während einer Zeitperiode zwischen der aktuellen Meldeinstanz und der letzten Meldeinstanz geändert wurde; und Mittel zum Erzeugen der Anzeige auf Basis eines Bestimmungsergebnisses.

11. Erste Vorrichtung nach einem der Ansprüche 1 bis 10, wobei die erste Vorrichtung eine Endgerätevorrichtung ist und die zweite Vorrichtung ein Standortverwaltungsfunktionsknoten ist.

12. Zweite Vorrichtung, die Folgendes umfasst:

Mittel zum Empfangen eines ersten Teils von Positionsbestimmungsmessungen mit einer Anzeige dazu, ob der erste Teil der Positionsbestimmungsmessungen gemeinsam mit einem zweiten Teil der Positionsbestimmungsmessungen zu verwenden ist oder nicht, um einen Standort einer ersten Vorrichtung zu schätzen, von der ersten Vorrichtung, die sich in einem Inaktivitätszustand befindet, wobei der zweite Teil der Positionsbestimmungsmessungen zuvor von der ersten Vorrichtung gemeldet wurde; und Mittel zum Schätzen des Standorts der ersten Vorrichtung mindestens teilweise auf Basis der Anzeige.

13. Zweite Vorrichtung nach Anspruch 12, die ferner Folgendes umfasst:

Mittel zum Übertragen von Unterstützungsinformationen zur ersten Vorrichtung zum Melden der Positionsbestimmungsmessungen, wobei die Unterstützungsinformationen mindestens eines von Folgendem umfassen:

einer zugeteilten Ressource für eine Datenübertragung in einem Inaktivitätszustand, einer Anzahl von Positionsbestimmungsmessungen, die von der ersten Vorrichtung zu melden sind, oder einer Periode zum Melden der Positionsbestimmungsmessungen.

14. Zweite Vorrichtung nach Anspruch 12 oder 13, wobei die Anzeige einen Ein-Bit-Indikator mit einem ersten Wert, der anzeigt, dass der Standort der ersten Vorrichtung während einer Zeitperiode zwischen einer aktuellen Meldeinstanz und der letzten Meldeinstanz nicht geändert wurde, und einem zweiten Wert, der anzeigt, dass der Standort der ersten Vorrichtung während der Zeitperiode geändert wurde, umfasst.

15. Verfahren, das Folgendes umfasst:

Durchführen von Positionsbestimmungsmessungen durch eine erste Vorrichtung in einem Inaktivitätszustand auf Basis eines Satzes von Messparametern; und Melden eines ersten Teils der Positionsbestimmungsmessungen zu einer aktuellen Meldeinstanz bei einer zweiten Vorrichtung mit einer Anzeige dazu, ob der erste Teil der Positionsbestimmungsmessungen gemeinsam mit einem zweiten Teil der Positionsbestimmungsmessungen zu verwenden ist oder nicht, um den Standort einer ersten Vorrichtung zu schätzen, wobei der zweite Teil der Positionsbestimmungsmessungen der zweiten Vorrichtung zuvor gemeldet wurde.

**Revendications**

1. Premier dispositif comprenant :

des moyens pour effectuer, sur la base d'un ensemble de paramètres de mesure, des mesures de positionnement ; et des moyens pour rapporter, à un deuxième dispositif, à une instance de rapport actuelle, une première partie des mesures de positionnement avec une indication précisant si la première partie des mesures de positionnement doit ou non être utilisée conjointement avec une deuxième partie des mesures de positionnement pour estimer un emplacement du premier dispositif, la deuxième partie des mesures de positionnement ayant été précédemment rapportée au deuxième dispositif.

2. Premier dispositif selon la revendication 1, comprenant en outre :

des moyens pour recevoir du deuxième dispositif des informations d'assistance pour rapporter les mesures de positionnement ; des moyens pour recevoir d'un dispositif réseau, des configurations de transmission de petites données, SDT, pour rapporter les mesures de positionnement ; et des moyens pour déterminer l'ensemble de paramètres de mesure sur la base des informations d'assistance et des configurations de SDT.

3. Premier dispositif selon la revendication 2, dans lequel les informations d'assistance comprennent au moins l'un des éléments suivants :

des ressources allouées pour la transmission de données d'état inactif,

un nombre de mesures de positionnement à rapporter par le premier dispositif, ou

une période pour rapporter les mesures de positionnement.

**4.** Premier dispositif de l'une des revendications 1 à 3, dans lequel l'ensemble de paramètres de mesure comprend au moins l'un des éléments suivants :

un nombre d'instances de rapport pour rapporter un nombre de mesures de positionnement configurées par le deuxième dispositif, ou

un nombre de mesures de positionnement à rapporter dans une instance de rapport respective des instances de rapport.

**5.** Premier dispositif de l'une des revendications 1 à 4, comprenant en outre :

des moyens pour mesurer, dans la durée temporelle entre différentes instances de rapport, un groupe de signaux de référence sur au moins une partie de ressources préconfigurées pour le positionnement,

dans lequel les mesures de positionnement pour chacune des instances de rapport sont mesurées à partir des mêmes points de transmission et de réception, TRP, ou à partir de TRP différents.

**6.** Premier dispositif de l'une des revendications 1 à 5, comprenant en outre :

des moyens pour déterminer si un emplacement du premier dispositif a changé pendant une période de temps entre l'instance de rapport actuelle et la dernière instance de rapport ; et

des moyens pour générer l'indication sur la base d'un résultat de détermination.

**7.** Premier dispositif selon la revendication 6, dans lequel le changement d'emplacement du premier dispositif est déterminé sur la base d'au moins un des éléments suivants :

les mesures de positionnement,

des mesures de signal de référence à partir d'un groupe de TRP, ou

des données obtenues à partir d'un ou plusieurs capteurs du premier dispositif.

**8.** Premier dispositif de l'une des revendications 1 à 7, dans lequel l'indication comprend l'un des éléments suivants :

un indicateur à un bit avec une première valeur indiquant que l'emplacement du premier dispositif n'a pas changé et une deuxième valeur indiquant que l'emplacement du premier dispositif a changé, ou

un indicateur comprenant une pluralité de bits correspondant chacun à une partie respective parmi de multiples parties des mesures de positionnement, et où pour chacun des bits, la première valeur indique une partie correspondante à utiliser conjointement avec le reste des multiples parties pour estimer l'emplacement du premier dispositif, et la deuxième valeur indique que la partie correspondante ne doit pas être utilisée conjointement avec le reste des multiples parties.

**9.** Premier dispositif de l'une des revendications 1 à 8, comprenant en outre :
conformément à une détermination selon laquelle toutes les mesures de positionnement sont rapportées, des moyens pour transmettre un message complet au deuxième dispositif.

**10.** Premier dispositif de l'une des revendications 1 à 9, comprenant en outre :

des moyens pour déterminer si une condition de ligne de visé, LOS, associée au premier dispositif a changé pendant une période de temps entre l'instance de rapport actuelle et la dernière instance de rapport ; et

des moyens pour générer l'indication sur la base d'un résultat de détermination.

**11.** Premier dispositif de l'une des revendications 1 à 10, dans lequel le premier dispositif est un dispositif terminal, et le deuxième dispositif est un nœud de fonction de gestion d'emplacement.

**12.** Deuxième dispositif comprenant :

des moyens pour recevoir d'un premier dispositif un état inactif une première partie de mesures de positionnement avec une indication précisant si la première partie des mesures de positionnement doit ou non être utilisée conjointement avec une deuxième partie des mesures de positionnement pour estimer un emplacement du premier dispositif, la deuxième partie des mesures de positionnement ayant été précédemment rapportée par le premier dispositif ; et

des moyens pour estimer l'emplacement du premier dispositif en se basant au moins en partie sur l'indication.

**13.** Deuxième dispositif selon la revendication 12, comprenant en outre :

des moyens pour transmettre au premier dispositif des informations d'assistance pour rapporter les mesures de positionnement,
dans lequel les informations d'assistance comprennent au moins l'un des éléments suivants :

des ressources allouées pour la transmission de données d'état inactif,
un nombre de mesures de positionnement à rapporter par le premier dispositif, ou
une période pour rapporter les mesures de positionnement.

14. Deuxième dispositif selon la revendication 12 ou 13, dans lequel l'indication comprend un indicateur à un bit avec une première valeur indiquant que l'emplacement du premier dispositif n'a pas changé pendant une période de temps entre une instance de rapport actuelle et la dernière instance de rapport, et une deuxième valeur indiquant que l'emplacement du premier dispositif a changé pendant la période de temps.

15. Procédé comprenant les étapes suivantes :

effectuer par un premier dispositif dans un état inactif, sur la base d'un ensemble de paramètres de mesure, des mesures de positionnement ; et rapporter, à un deuxième dispositif, à une instance de rapport actuelle, une première partie des mesures de positionnement avec une indication précisant si la première partie des mesures de positionnement doit ou non être utilisée conjointement avec une deuxième partie des mesures de positionnement pour estimer l'emplacement du premier dispositif, la deuxième partie des mesures de positionnement ayant été préalablement rapportée au deuxième dispositif.

**FIG. 1**

**FIG. 2**

300

310

PERFORM, BASED ON A SET OF MEASUREMENT PARAMETERS, POSITIONING MEASUREMENTS

320

REPORT, AT A CURRENT REPORTING INSTANCE AND TO A SECOND DEVICE, A FIRST PART OF THE POSITIONING MEASUREMENTS WITH AN INDICATION REGARDING WHETHER OR NOT THE FIRST PART OF THE POSITIONING MEASUREMENTS IS TO BE JOINTLY UTILIZED WITH A SECOND PART OF THE POSITIONING MEASUREMENTS TO ESTIMATE A LOCATION OF THE FIRST DEVICE

**FIG. 3**

400

410

RECEIVE, FROM A FIRST DEVICE, A FIRST PART OF POSITIONING MEASUREMENTS WITH AN INDICATION REGARDING WHETHER OR NOT THE FIRST PART OF THE POSITIONING MEASUREMENTS IS TO BE JOINTLY UTILIZED WITH A SECOND PART OF THE POSITIONING MEASUREMENTS TO ESTIMATE A LOCATION OF THE FIRST DEVICE

420

ESTIMATE THE LOCATION OF THE FIRST DEVICE BASED AT LEAST IN PART ON THE INDICATION

**FIG. 4**

**FIG. 5**

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **INTERDIGITAL INC**. Discussion on reporting of positioning information using SDT. *3GPP DRAFT; R2-2107684, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 05 August 2021, vol. RAN WG2 (Electronic), 20210816-20210827

- **ERICSSON**. SDT, UL Positioning and On Demand PRS Aspects. *3GPP DRAFT; R2-2101393, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 15 January 2021, vol. RAN WG2 (Electronic meeting), 20210125-20210205

- **ERICSSON SAMSUNG ELECTRONICS CO LTD**. Views on Rel-17 NR Positioning And SDT WIDs. *3GPP DRAFT; RP-210488, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE*, 15 March 2021, vol. TSG RAN (Electronic Meeting), 20210316-20210326